Europäisches Patentamt

European Patent Office

Office européen des brevets

(11) Publication number: **0 460 642 A2**

# EUROPEAN PATENT APPLICATION

(21) Application number: 91109196.5

(51) Int. Cl.⁵: **G06F 15/18**

(22) Date of filing: **05.06.91**

(30) Priority: **06.06.90 JP 146244/90**
**30.11.90 JP 337092/90**

(43) Date of publication of application:
**11.12.91 Bulletin 91/50**

(84) Designated Contracting States:
**DE FR GB**

(71) Applicant: **HITACHI, LTD.**
**6, Kanda Surugadai 4-chome**
**Chiyoda-ku, Tokyo 101(JP)**

(72) Inventor: **Maeda, Akira**
**17-12-A203, Yutaka-cho**
**Sagamihara-shi, Kanagawa-ken 228(JP)**
Inventor: **Someya, Ryuko**
**No. 402, Hitachikotohira Apt., 320-1, Ouzenzi**
**Asao-ku, Kawasaki-shi, Kanagawa-ken**
**215(JP)**
Inventor: **Funabashi, Motohisa**
**4-6-4-505, Araisono**
**Sagamihara-shi, Kanagawa-ken 228(JP)**
Inventor: **Mizuno, Hirotaka**
**2-5-2-205, Souen**
**Ikeda-shi, Oosaka-fu 563(JP)**
Inventor: **Nakano, Toshihiko**
**No B-305, Tenjin Apt., 1077--1,**
**Ishinazakamachi**
**Hitachi-shi, Ibaraki-ken 319-12(JP)**

(74) Representative: **Strehl, Schübel-Hopf,**
**Groening**
**Maximilianstrasse 54 Postfach 22 14 55**
**W-8000 München 22(DE)**

(54) **A method and system for adjusting fuzzy inference parameters.**

(57) A method and system is disclosed for fuzzy inference parameter adjustment in a fuzzy inference system for obtaining an output value by a node from at least one input value in a calculation network having a plurality of nodes for calculating the output value from at least one input value in predetermined procedures and at least link for connection between the nodes, and for obtaining a fuzzy inference output value with use of the calculation network by inputting an output value of a node to another node through the link for the node and by successively repeating similar input-output conversion as necessary.

The system can trace back a cause of error of the inference output value from a teacher data on the calculation network to adjust each fuzzy inference parameter, thereby providing a highly accurate and highly efficient inference.

The system learns input-output relationships between pluralities of sets of inputs and outputs expected in advance, and obtains a value by differentiating or finite differencing a difference of an output value to an input from an expected output value with respect to the parameter for each of the sets of the inputs and the outputs, thereby being capable of indicating high order statistical value of dispersion and the like for each pair of input and output and indicating distribution of differentiated or infinite difference calculated values.

EP 0 460 642 A2

EP 0 460 642 A2

## BACKGROUND OF THE INVENTION

The present invention relates to a method and system for automatically adjusting parameters contained in fuzzy inference so that difference of inference output from a teacher data can be reduced to increase the inference accuracy, and more particularly concerns a method and system for effectively indicating calculation status of fuzzy inference or neural network during or after learning of input-output relationship.

## DESCRIPTION OF THE PRIOR ART

There have been many prior disclosures about the fuzzy inference. It has been proposed to use a method for automatically adjusting fuzzy inference parameters, which is discussed in an article in the Transactions of the Society of Instrument and Control Engineers, Vol 24, No. 2 (1984) pp. 191197, entitled "Self-tuning Fuzzy Controller" (hereinafter referred to as the prior art 1).

It has also been attempted to use another method for automatically adjusting the fuzzy inference parameters according to learning rules of the neural network in the way that the fuzzy inference process is converted to calculation by the neural network. The method of the type is described in an article in the Proceedings of 1990 International Joint Conference on Neural Networks, Vol. 2, pp. 55-58, 1990 (hereinafter referred to as the prior art 2).

Further, it has been endeavored to use other method for making the fuzzy inference on a neural network. The method of the type is described in an article in the Transactions of Information Processing Society of Japan, Vol. 30, No. 6, pp. 795-797 (hereinafter referred to as the prior art 3).

Further more, it has been proposed to provide a system for learning input-output relationships with use of fuzzy inference or neural network. It is discussed in an article in the Proceedings of International Conference on Fuzzy Logic & Neural Networks, 1990, entitled the "Neurofuzzy System: Fuzzy Inference Using a Structured Neural Network" (hereinafter referred to as prior art 4). It also is described in a book entitled the "Neural Network Information Process," Sangyo Tosho, 1988, by Hideki Aso (hereinafter referred to as the prior art 5).

However, the prior art 1 assumed that special forms of fuzzy rules or fuzzy inference rules be used. It can not be applied to general fuzzy inference. It also does not take account shortening the calculation time needed for the parameter adjustment. It proves to have a disadvantage in increase of calculation cost for the parameter adjustment if the number of the rules and the parameters to be adjusted is increased.

The prior art 2 will not adjust membership functions contained in condition and output sections of a parameter, but only its weight for a fuzzy rule. This is disadvantageous in not making fine adjustment so that the fuzzy inference after adjustment is limited in increasing the performance.

The prior art 3 makes the fuzzy inference on the neural network in more natural way. However, it does not take learning, or automatic parameter adjustment, into account.

The prior arts mentioned above are disadvantageous in common that they do not take into account their application to combination of a plurality of stages of fuzzy inference.

The prior art 5 makes use of the so-called error backpropagation method as neural network learning algorithm that an error of the network output from a desired one is propagated back in a reverse direction of the calculation in the network.

The original error backpropagation method, which is for use in the neural network, can also be applied to the fuzzy inference as shown in the prior art 4, where the fuzzy inference is approximated and represented by a neural network.

The method has the algorithm that can adjust the parameters of the network so that the network output can approach the desired one as close as possible when one or plurality of sets of inputs and outputs are given. However, in general, the actual output and desired one will not coincide completely, often remaining some error after learning. It was difficult to explain why the error remains as the status inside the network was treated like a black box. To further reduce the error, therefore, trial-and-error work has to be repeated such as the initial parameter status at the start of learning has to be changed, or the structure of the network has to be modified.

## SUMMARY OF THE INVENTION

Accordingly, the first object of the present invention is to provide a parameter adjusting method and system useful for adjusting all parameters in fuzzy inference. It also is to provide a method and system that can reduce the amount of computation and is preferable for the parameter adjustment in a general fuzzy inference including multi-staged fuzzy inference in a way that the adjustment can be on a calculation

2

network of neural network type.

The second object of the present invention is to provide a method and system that can easily recognize the status inside the network to efficiently redefine the network structure and fuzzy rules in a way if the fuzzy inference or neural network is used to make learning of input-output relationship, a calculation status of the network during or after learning can be indicated.

In order to accomplish the above mentioned object, the present invention has the fuzzy inference process represented on the calculation network, has the inference made as flow of signal in forward direction on the network, and has the parameter adjustment performed by making the difference of the inference output from the teacher data flow in reverse (backward) direction on the network.

A feature of the present invention relates to a method for fuzzy inference parameter adjustment in a fuzzy inference system for obtaining an output value by a node from at least one input value in a calculation network having a plurality of nodes for calculating the output value from at least one input value in predetermined procedures and at least one link for connection between the nodes, for obtaining a fuzzy inference output value with use of the calculation network by inputting an output value of a node to another node through the link for the node, for obtaining an error of the fuzzy inference output value from a predetermined expected output value, and for adjusting the fuzzy inference parameter on the basis of the error.

In order to accomplish the above mentioned second object, the present invention can calculate for a given input a value which is differentiation or finite difference calculation of a difference of actual output from teacher data in terms of an intermediate result in the parameter to be adjusted or fuzzy inference process or output of each node in the neural network. Data of the differentiated or finite difference calculated value made for each set of the given input and output, are processed depending on purpose in a desired method, and intermediate status of calculation in the fuzzy inference and neural network are indicated.

In turn, the following summarizes functions and operations of the present invention.

As to the first object mentioned above, the present system can clearly express dependent relationship of the inference result on various parameters contained in the inference in a way the fuzzy inference process is expressed on the calculation network.

The inference process is performed by making forward signal flow on the calculation network. Through the process, the inputoutput relationship at any portion of the calculation network can be determined. As the parameter in the inference are contained in the input-output relationship, actual input and output at the portion can be determined. For small variation of any of the parameters, it is possible to obtain a differential coefficient to know of how the output at the portion varies. Similarly, for small variation of the input at the portion, it also is possible to know of how the output varies.

An object of the parameter adjustment is to minimize difference of actual output as a result of the inference from a teacher data. The inference result is an output at the last portion of the calculation network. If the portion contains any parameter to be adjusted, it is possible to obtain a differential coefficient related to the parameter and another differential coefficient related to the input.

As the input at the last portion is an output of the penultimate portion, it is possible to obtain a differential coefficient (of the inference result) related to the penultimate portion. It therefore obvious that differential coefficients related to the inference parameter and input contained at the penultimate portion in similar way.

If the above mentioned operation is repeated, or if the difference of the actual output from the teacher data is made to flow backward on the calculation network, differential coefficients related to all the parameters contained in the inference can be obtained.

In the system described above, repetition of calculation can be omitted as compared with a method that the differential coefficient is obtained while the parameter contained in the inference is small varied independently. This can reduce the amount of calculation to a great extent.

Also, the system described above can express the inference process on the calculation network not only through a single stage of fuzzy inference, but also a multi-staged fuzzy inference to perform the parameter adjustment in right the same way.

With respect to the second object, the conventional backpropagation method adjusts a parameter on the basis of an averaged value of the foregoing differentiated or finite difference calculated values for the set of the given input and output. If the parameter stands still in a state that it will not be changed any more after the learning, the averaged value should become nearly 0.

However, it may occur that even after the learning, the actual output does not coincide with the teacher data completely so that the performance of the fuzzy inference or the neural network is not sufficient. In this case, the conventional backpropagation method cannot give more information than that as it uses only the averaged value of the differentiated or finite difference calculated values.

On the other hand, the present invention can make calculation of the differentiation or finite difference calculation for each pair of input and output to indicate higher order statistical value such as dispersion and the like, or to indicate a relationship between the input value for each node in the neural network and the differentiated or finite difference calculated value, or to indicate distribution of the differentiated or finite difference calculated values for a intermediate calculation result in the fuzzy inference. This can indicate an intermediate status of calculation during or after the learning. This can express the information that cannot be given only in the parameter adjustment algorithm by the conventional error backpropagation method or the like. Such a feature can support redefining the rules in the fuzzy inference and reconfiguration of the network structure in the neural network.

The foregoing and other objects, advantages, manner of operation and novel features of the present invention will be understood from the following detailed description when read in connection with the accompanying drawings.

BRIEF DESCRIPTION OF THE DRAWINGS

Fig. 1 is a block diagram for the fuzzy inference system according to the present invention.

Fig. 2 is a calculation network for representing the fuzzy inference process described above.

Fig. 3 is an illustration of the inference process described above.

Fig. 4 is an membership function which takes a trapezium shape.

Fig. 5 is a calculation network for the fuzzy inference process, corresponding to Fig. 2.

Fig. 6 is a flow chart for carrying out the first and second embodiments as an example for processing in the parameter adjustment algorithm in Fig. 1.

Fig. 7 is a typical process flow for building the fuzzy inference system in the third embodiment.

Fig. 8(a) is a resulted indication of learning status with respect of the node (for example, 503 in Fig. 5) for calculation a membership function corresponding to an input variable. Fig. 8(b) shows a status that learning is not well performed for the node concerned, while Fig. 8(a) is the sate that it is rather well.

Fig. 9 shows results indicated as the learning status in a fourth embodiment of the present invention.

Fig. 10 shows results indicated as the learning statuses in a fifth embodiment of the present invention.

Fig. 11 is a flow chart for carrying out the third embodiment of the present invention.

DETAILED DESCRIPTION OF THE PREFERRED EMBODIMENT

For the purpose of illustration only, the present invention will now be illustrated by the following embodiments.

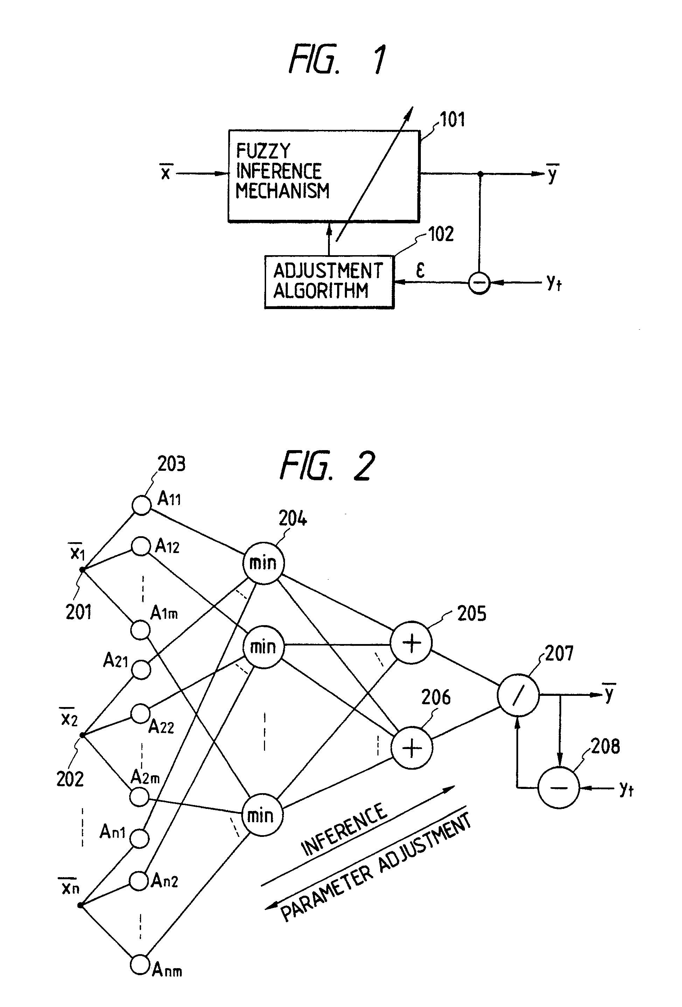

Fig. 1 is a .block diagram for the fuzzy inference system according to the present invention. A fuzzy inference mechanism calculates with an input variable x, and output a fuzzy inference result y. If a teacher data $y_t$ is given, an adjustment algorithm can be used to adjust parameters contained in the fuzzy inference mechanism so that a difference E ($= (y_t - y)^2$) from the actual output E can approach 0. This can increase the inference accuracy. The present invention relates to the adjustment algorithm.

There are several different definitions for the fuzzy inference executed by the fuzzy inference mechanism shown in Fig. 1. The most common method for the fuzzy inference is described, for example, in the Information Process, Vol. 30, No. 8, pp 942947, 1989. Description of the fuzzy inference is based on the method here. Of course, the present invention shall not be limited to the method.

Fuzzy rules can be written as follows.

if $x_1$ is $A_{11}$ and $x_2$ is $A_{21}$ and$\cdot\cdot\cdot$and $X_n$ is $A_{n1}$ then $y = B_1$
if $x_1$, is $A_{12}$ and $x_2$ is $A_{22}$ and$\cdot\cdot\cdot$and $x_n$ is $A_{n2}$ then $y = B_2$

$$\text{if } x_1 \text{ is } A_{1n} \text{ and } x_2 \text{ is } A_{2n} \text{ and}\cdots\text{and } x_n \text{ is } A_{nn} \text{ then } y = B_n \quad (1)$$

where n is the number of the input variables, m is the number of the fuzzy rules in connection with the output variable y, $A_{ij}$ is a fuzzy membership function of the ith input variable in the jth rule, and $B_j$ is a fuzzy membership function of the output variable y in the jth rule. Definition ranges for $A_{ij}$ and $B_j$ are whole ranges for the respective independent variables, and their value range is [0, 1].

In Eq. (1) appears every input variable in every rule. If this is made, for example, if the ith input variable

EP 0 460 642 A2

is not in connection with the jth rule, it can be regarded that $A_{ij}$ is a function always taking value 1. Since the group of rules for different variables can be regarded independent, the following describes only the rules given in Eq. (1).

When for the value of the input valuable in Eq. (1), $x_i = \bar{x}_i$, the inference process is as follows. First, a fuzzy grade Wj should be calculated.

$$W_J = \min(A_{1J}(\overline{x_1}), \ A_{2J}(\overline{x_2}), \ \cdots, \ A_{nJ}(\overline{x_n})) \qquad (2)$$

In turn, the membership function B(y) cf the output variable should be calculated.

$$B(y) = \max(W_1 * B_1, W_2 * B_2, \cdots, W_m * B_m) \qquad (3)$$

The final output value (inference result) y can be determined as

$$y = \int d y \, B(y) \, y / \int d y \, B(y) \qquad (4)$$

where B is the output membership function.

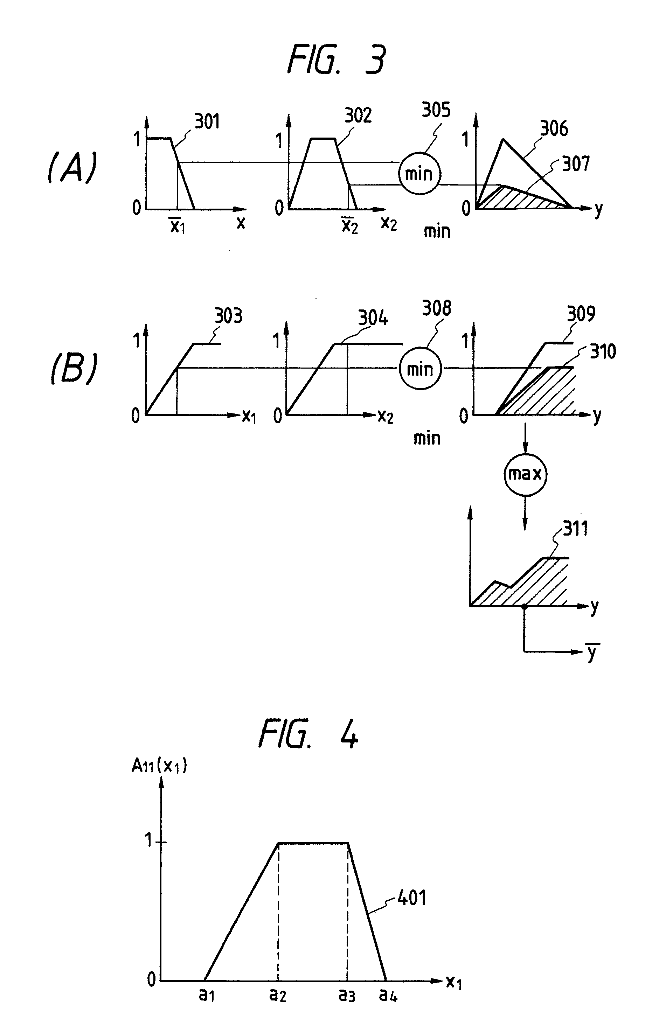

Fig. 3 is an illustration of the inference process described above. In the figure 301 is a membership function $A_{11}$ of the variable $x_1$. Similarly, 302 is a membership function $A_{21}$, 303 is a membership function $A_{12}$, and 304 is a membership function $A_{22}$. 305 calculates a minimum value of $A_{i1}(\bar{x}_1)$ to obtain the fuzzy grade $W_1$ for the rule 1. 306 denotes a membership function $B_1$. A shaded portion 307 is a membership function corresponding $W_1{}^*B_1$.

Similarly, 308 obtains the fuzzy grade $W_2$ for the rule 2. 309 denotes a membership function $B_2$. A shaded portion 3107 is a membership function corresponding to $W_2{}^*B_2$.

311 denotes a output membership function B obtained by taking the maximum value of the membership functions of the output variables y for the rules. The output y is at the center of gravity of the portion enclosed by the graph of the function 311 and the x-axis.

The following describes the fuzzy inference system in a first embodiment of the present invention where the calculation for the maximum value in Eq. (3) is replaced by an algebraic sum.

In this case, Eq. (3) is written as

$$B(y) = W_1 * B_1 + W_2 * B_2 + \cdots + W_m * B_m \qquad (5)$$

Substituting Eq. (5) into Eq. (4), we obtain

$$y = \Sigma \, y_i * W_i / \Sigma \, s_i * W_i \qquad (6)$$

where

$$s_i = \int d y \, B_i(y) \qquad (7)$$

$$y_i = \int d y \, y \, Bi(y) \qquad (8)$$

Fig. 2 is a calculation network for representing the fuzzy inference process described above. In the figure, 201 denotes a node corresponding to the input variable $\bar{x}_1$. In the actual inference, a real input value $\bar{x}_1$ should be set. Similarly, 202 denotes a node corresponding to the input value $x_2$, and nodes are made to correspond to n input variables.

203 is a node corresponding to the membership function of a variable 1 in the rule 1. The node 203 can output value $A_{11}(\bar{x}_1)$ if a value $\bar{x}_1$ is input. A node is provided for every membership function appearing in Eq. (1).

204 is a node for obtaining the fuzzy grade for the rule 1. It is a node that can output a minimum one of $A_{11}(\bar{x}_1)$, $A_{21}(\bar{x}_2)$, ..., $A_{n1}(\bar{x}_n)$ which are input according to Eq. (2). Similarly, nodes are provided for obtaining the fuzzy grade for the respective rules.

A node 205 calculates the numerator of Eq. (6). It multiplies the fuzzy grade of every rule calculated in

5

the node 204 by the weight $y_i$ in Eq. (8), and sums the products before outputting the result. Similarly, a node 206 calculates the denominator of Eq. (6) in which the weight is $s_i$ for the node 205. It may be assumed here that $y_i$ is a parameter associated with the node 205, and $s_i$ is a parameter associated with the node 206.

A node 207 divides the output of the node 205 by the output of the node 206 to calculate the final output value y.

As described so far, the calculation network shown in Fig. 2 can execute the fuzzy inference in Eqs. (1) through (8).

In turn, the following describes adjustment procedures for the fuzzy inference parameters in the first embodiment. An object for the parameter adjustment is to minimize a square error of a target output $y_t$ and actual output. Let an object function be $E = (y_t - y)^2$ to make $\Delta\alpha^\alpha - \partial E/\partial\alpha$ where $\alpha$ is any of the parameters. A steepest descent method is used to make the parameter adjustment. Therefore, it is to obtain a partial differential coefficient of the object function E by all the parameters contained in the fuzzy inference process described above.

First, the target output $y_t$ should be prepared for the actual output value y. A node 208 calculates a difference $(y_t - y)$ of the two output values. The result is an error signal $\delta_{207}$ for the node 207. After this, the calculation procedures are traced back to obtain the partial differential coefficient for the output value y of each node.

The error signal $\delta$ for the output node 207 is proportional to the partial differential value of the object function E by the y of the node 207. As the node 207 has the outputs of the nodes 205 and 206 input thereto, the partial differential coefficient of the object function by the output $z_{205}$ can be obtained using the differential rule of the composite function as

$$\partial E / \partial z_{205} = \partial E / \partial y \cdot \partial y / \partial z_{205}$$
$$= \delta_{207} \cdot \partial y / \partial z_{205}$$
$$= \delta_{207} \cdot z_{206} \tag{9}$$

Similarly, the partial differential coefficient of the object function by the output $z_{206}$ can be obtained as

$$\partial E / \partial z_{206} = \partial E / \partial y \cdot \partial y / \partial z_{206}$$
$$= \delta_{207} \cdot \partial y / \partial z_{206}$$
$$= \delta_{207} \cdot z_{205} / z_{206}{}^2 \tag{10}$$

In turn, the partial differential coefficient for the output $z_{204}$ of, for example, the node 204 can be obtained easily using

$$\partial E/\partial z_{204} = \partial E/\partial z_{205} \cdot \partial z_{205}/\partial z_{204} + \partial E/\partial z_{206} \cdot \partial z_{206}/\partial z_{204} \tag{11}$$

and the following equation derived from the definition mentioned previously.

$$\partial z_{205} / \partial z_{204} = y_1$$
$$\partial z_{206} / \partial z_{204} = s_1 \tag{12}$$

Similarly, the partial differential coefficients for the outputs of the other nodes can be obtained in sequence. It should be noted that the above mentioned calculation procedures can be executed even if there are any relational functions which cannot be differentiated at some points, for example, in the node 204 which calculates for the minimum value. In other words, as the output of the node 204 can be regarded equal to any one of the input $A_{i1}(\bar{x}_i)$ where $1 \leq = i \leq = n$, only the partial differential value in connection with the equal input can be 1, and the other ones can be 0.

With the calculation procedures described above, we can obtain the partial differential values of the object functions output by all the nodes in Fig. 2. The parameters to be adjusted are contained in the input/output relation of the nodes. That is, the output z of any node can be written in terms of inputs $\xi_1$, $\xi_2$,..., $\xi_k$ and parameters $\alpha_1$, $\alpha_2$, ..., $\alpha_k$ as

$$z = f(\xi_1, \xi_2, {}^{\bullet\bullet\bullet}, \xi_k; \alpha_1, \alpha_2, {}^{\bullet\bullet\bullet}, \alpha_1) \qquad (13)$$

the partial differential coefficients for the object functions in connection with the output z can be obtained in the procedures, and the ones in connection with the parameter $\alpha_i$ can be made by

$$\partial E / \partial \alpha_i = \partial E / \partial z \cdot \partial z / \partial \alpha_i \qquad (14)$$

As an example, the partial differential coefficient in connection with the parameter $y_1$ contained in the node 205 in Fig. 2 can be obtained as

$$\partial E \diagup \partial y_1 = \partial E \diagup \partial z_{205} \cdot \partial z_{205} \diagup \partial y_1 \qquad (15)$$

$$= \partial E \diagup \partial z_{205} \cdot W_1$$

If the amount of adjustment $\Delta y_i$ of the parameter $\Delta y_i$ is

$$\Delta y_i^\propto - \partial E / \partial y_i \qquad (16)$$

the parameter adjustment by the steepest descent method is possible. The proportional coefficient in Eq. (16) is generally called a learning coefficient, which is one of factors for determining a speed of convergence.

In turn, the following describes a parameter adjustment method in connection with the nodes such as the node 203 representing the membership function. The input/output relationship in the node 203 can be written with the output of $z_{203}$ as

$$z_{203} = A_{11}(\overline{x}_1) \qquad (17)$$

In general, the membership function will not take arbitrary shape, but is often specified by a relatively few parameters. As an example, Fig. 4 is an membership function 401 which takes a trapezium shape. The shape of the membership function is specified with coordinates $a_1$, $a_2$, $a_3$, and $a_4$, of four corners of the trapezium. Eq. (17) can be written with the parameters as

$$z_{203} = A_{11}(\overline{x}_1 ; a_1, a_2, a_3, a_4) \qquad (18)$$

As a partial differential value $\partial z_{203}/\partial_{ai}$ of the output $z_{203}$ by any of the parameters can be obtained easily, the parameter adjustment can be made by the steepest descent method as in Eq. (16).

With obtaining the partial differential coefficient $\partial E/\partial\alpha_i$ by the method described in the first embodiment, the adjustment of fuzzy inference parameters can be made by changing every parameter little by little. It is apparent that the method can greatly reduce the amount of calculation as compared with the one for obtaining the partial differential coefficients.

The parameters for specifying the shape of the membership function may be defined in any desired way. In Fig. 4, for example, only the right and left parallel movement of the trapezium can be used for the parameter adjustment. It is also obvious that membership functions other than the trapezium can be defined by any desired parameters.

In Fig. 2, the membership functions were all different for the input variables. If there is a restriction that the same membership functions are contained, and their shapes have to be identical even after the parameter adjustment, the corresponding nodes can be brought to one group. This allows the parameter adjustment while the restriction can be met.

So far as described in the first embodiment of the present invention, the parameters for the fuzzy inference can be automatically adjusted so that the actual output can approach a teacher data, if the inputs and a set of outputs desired for them are given or if the learning data are give.

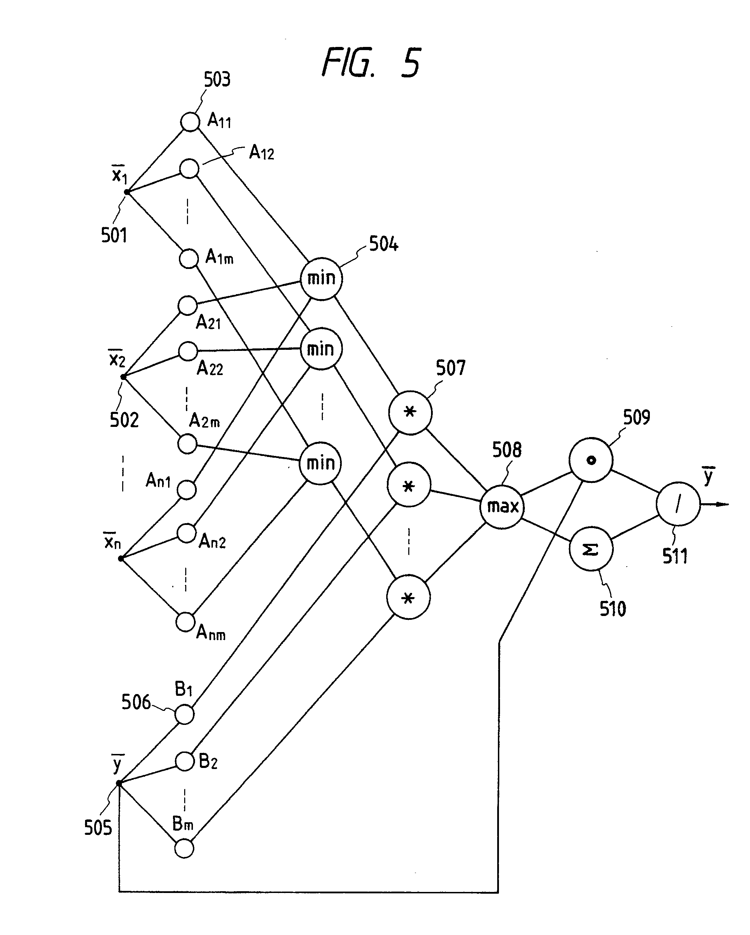

The following describes a second embodiment of the present invention with reference to Fig. 5. The second embodiment executes Eq. (3) directly, while the first one made the fuzzy inference by replacing the maximum calculation in Eq. (3) with algebraic addition. In the integration in Eq. (4), however, the output variables are discretized to summation as

$$y = \Sigma\ y[i]_*B(y[i])/\ \Sigma\ B(y[i]) \qquad (19)$$

Fig. 5 is a calculation network for the fuzzy inference process, corresponding to Fig. 2. In the figure, 501 denotes a node corresponding to an input variable $\bar{x}_1$. In the actual inference, a real input value $\bar{x}_1$ should be set. Similarly, 502 denotes a node corresponding to the input value $x_2$, and nodes are made to correspond to n input variables.

503 is a node corresponding to the membership function of a variable 1 in the rule 1. The node 503 can output value $A_{11}\ (\bar{x}_1)$ if a value $\bar{x}_1$ is input. A node is provided for every membership function appearing in Eq. (1).

504 is a node for obtaining the fuzzy grade for the rule 1. It is a node that can output a minimum one of $A_{11}\ (\bar{x}_1)$, $A_{21}\ (x_2)$, ...., $A_{n1}\ (\bar{x}_n)$ which are input according to Eq. (2). Similarly, nodes are provided for obtaining the fuzzy grade for the respective rules.

505 is a node for outputting values of discretized output variable y as vectors. That is, y = (y[1], y[2], ..., y[k]).

506 is a node corresponding to the membership function $B_1$ of the output variable. It has y input thereto, and outputs $B_1(y) = (B_1(y[1]), B_1(y[2]), ..., B_1(y[k]))$. Similarly, nodes corresponding to the other membership functions are provided.

507 is a node that has the fuzzy grade $W_1$ for the rule 1 given as output of the node 504 and $B_1(y)$ input thereto, and outputs their product of $(W_1{}^*B_1(y[1]), W_1{}^*B_1(y[2]), ..., W_1{}^*B_1(y[k]))$. Similar nodes are provided to correspond to the other rules.

508 is a node that has m k-dimensional vectors input thereto, and outputs k-dimensional vectors having taken maximum values of the respective components. That is, if having $y_1$, $y_2$, ..., $y_m$ input, then it outputs max $(y_1, y_2, ..., y_m) = (\max\ (y_1[1], y_2[1], ..., y_m[1]), (\max\ (y_1[2], y_2[2], ..., y_m[2]), ...)$.

A node 509 has the outputs of the nodes 508 and 505 input thereto, and outputs their inner product. A node 510 has the output of the node 508 input thereto, and sums the k components to output.

A node 511 calculates (output of the node 509)/(output of the node 510), and outputs a final output value y.

Fig. 5 represents the input-output relationships of the vector values by thick lines.

As can be seen from the above description, the calculation network in Fig. 5 executes the fuzzy inference according Eqs. (2), (3), and (19).

The parameter adjustment can be made in right the same way as in the first embodiment. In Fig. 5 are adjusted parameters contained in the membership function $A_{ij}$ and $B_i$ of the input and output variables.

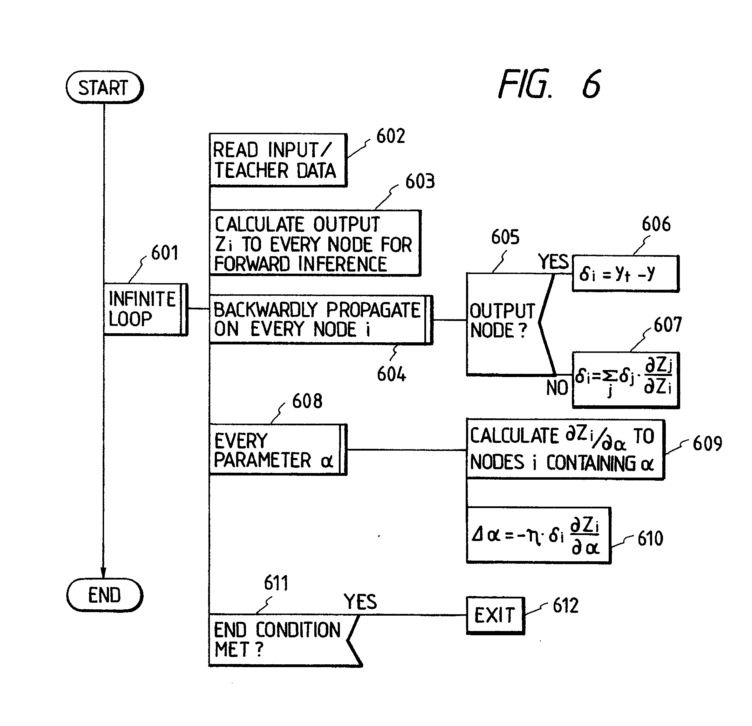

Fig. 6 is a flow chart for carrying out the first and second embodiments as an example for processing in the parameter adjustment algorithm in Fig. 1. In the following description, let $z_i$ be the output of each calculation node in Fig. 2 or 5, and $\delta_i$ be a differential coefficient of the output y by $z_i$.

First, step 601 repeats steps 602 through 612 unconditionally.

Step 602 reads data used for learning, i.e., values of the input variables and output value $y_t$ desired for them.

Step 603 makes fuzzy inference on the basis of the values of the input variables read in step 602. In this process, we can obtain the output values $z_i$ of all the nodes of the calculation network in Fig. 2 or 5.

Step 604 retraces back all the nodes of the calculation network from the output to input. It should be noticed that as the calculation network contains no closed loops, the retrace is determined unambiguously. Let i denote the number of the node selected in step 604.

Step 605 judges whether the node selected in step 604 is the last one of the calculation network. If it is output node, step 606 is executed, If not, step 607 is executed.

Step 606 obtains $\delta_i = y_t - y$ where $\delta_i$ is for the output node.

Step 607 obtains $\delta_i$ for the nodes other than the output node using

8

$$\delta_i = \Sigma_j \, \delta_j \frac{\partial z_j}{\partial z_i}$$

where the summation is made for all the nodes j which have the outputs $z_i$ of the selected nodes input thereto.

This allows obtaining differential coefficients for the inference result y by the outputs of all the nodes in the calculation network.

Step 608 executes steps 609 and 610 for all the parameters to be adjusted.

Step 609 calculates $\alpha z_i/\partial\alpha$ for the node i contained in the parameter $\alpha$. Since $\alpha$ is a parameter for determining the input-output relationship in the node i, the differential value can be easily obtained.

Step 610 obtains a change $\Delta\alpha$ of the parameter $\alpha$ on the basis of the differential coefficient obtained in step 609 by

$$\Delta\alpha = \eta\,\delta_i\,\partial z_i/\partial\alpha$$

to change the value of the parameter a to $\alpha \leftarrow \alpha + \Delta\alpha$.

Step 611 judges whether predetermined end conditions are met. As an example, it judges whether the above mentioned steps have been executed by a predetermined number of times, or judges whether a difference of the actual output and teacher data is smaller than a predetermined value as a result of the parameter adjustment. Step 602 can be executed only when the end conditions are met.

Step 612 regards that the parameter adjustment ends, comes out of the infinite loop in step 601, and stops the process.

The process flow described above accomplishes the first and second embodiments.

The first and second embodiments described above are most different in that: It is assumed that the first embodiment have the rules give independent effects to the output variables, and therefore the effects can be added up linearly. The second embodiment, on the other hand, as seen from the fact that the maximum computation is contained in Eq. (3), has non-independent effects of the rules, remaining non-linear effects. Taking the non-linear effect into account, the configuration in Eq. (5) can be simplified further to reduce the amount of computations needed for the parameter adjustment.

For example, if the number of memberships for the output variables contained in Eq. (1) is smaller compared to that of rules, it can be made that a node for obtaining the maximum value of the fuzzy grade of the rules having the same output membership relations should be added to Fig. 2. The output of the node should be the fuzzy degree for the output membership function. Additional average should be made as in Eq. (5). Such a method takes into account the non-linearity between the rules having the same output membership function so that results closer to the fuzzy inference in Fig. 5 can be obtained by less amount of computation.

There is another method that takes into account further general non-linear effect. The section such as the node 204 in Fig. 2 which has the fuzzy grade of any rule input thereto and outputs y is replaced by a so-called multi-layer artificial neural network to represent a backpropagation so that learning can be made by a learning algorithm, thereby allowing the parameter adjustment.

It is obvious that the both methods make use of the principles of the present invention that the fuzzy inference process is represented in the calculation network, and that the errors are propagated back to adjust all the parameters including the membership functions, being not different in their effects.

The foregoing two embodiments assume that the membership functions be piecewise linear functions. It is, of course, possible to use differentiable functions of any input values such as sigmoid functions often used in the artificial neural networks.

Also, the two embodiments used the single stage of fuzzy inference for parameter adjustment as an example. The present invention, of course, can apply its system and method to make a multiple of stages of fuzzy inference.

Further, the two embodiments had all the parameters to be adjusted contained in the input-output relationships of the nodes. It is, of course, possible to provide for a link an additional parameters of representing a connection strength for connection between the nodes as in ordinary artificial neural network. For the purpose, the parameter adjustment procedures are right the same as described in the embodiments described above.

In turn, a third embodiment of the present invention is described by reference to the accompanying drawings in which:

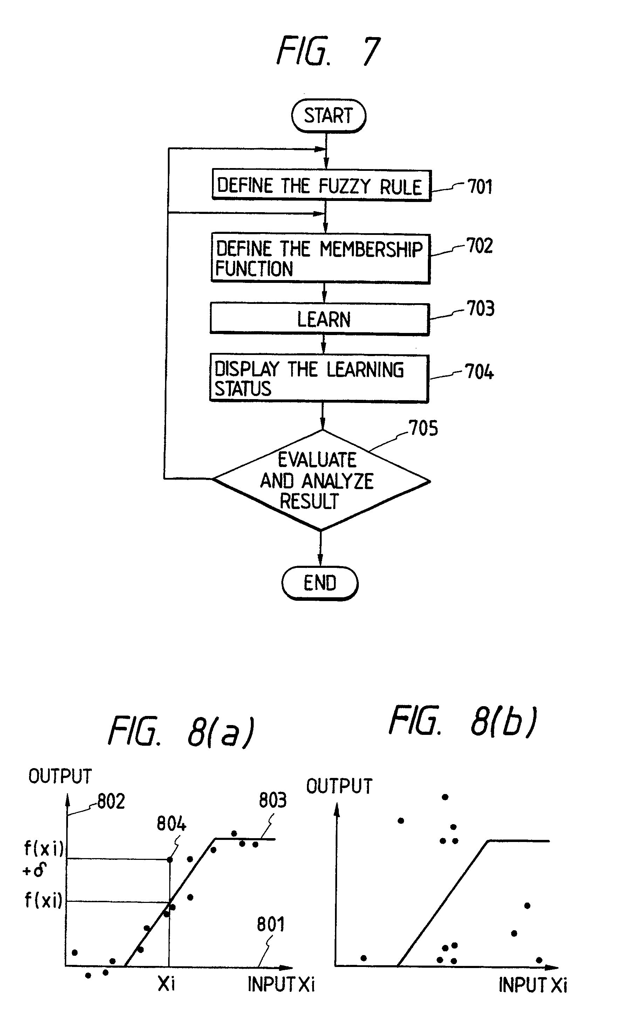

Fig. 7 is a typical process flow for building the fuzzy inference system in the third embodiment.

In the figure, a fuzzy rule defining step 701 defines a fuzzy rule. In turn, a membership function defining step 702 defines a membership function contained in the fuzzy rule. In turn, a learning step 703 uses a given input and an output desired for it to make learning parameters such as membership function shapes contained in the fuzzy inference using a proper learning algorithm. After the learning, a learning status display step 704 indicates the fuzzy inference status after learning. In an evaluate and analyze step 705, a system building person evaluates and analyzes the performance of fuzzy inference system on the basis of the data displayed. If it is sufficient, the system building ends. If not, he returns to the fuzzy rule defining step 701 or the membership function defining step 702 to make rebuilding the fuzzy inference system.

The third embodiment of present embodiment relates to the learning status display step 704.

Assume that the fuzzy inference method be used same as in the first and second embodiments. Of course, the present invention shall not be limited to that method, but for the purpose of illustration only. The learning step 703 in Fig. 7 makes use of the system described in the second embodiment.

The learning status can be indicated in terms of $\delta\alpha = \partial E/\partial\alpha$ calculated through the learning process described in the second embodiment where $\alpha$ is any of desired parameters or a value of an intermediate output in the fuzzy inference. In the conventional error backpropagation method, the value of $\delta\alpha$ is used for adjusting the parameter. When the learning is completed, therefore, summation of $\delta\alpha$ for a set of inputs and outputs will be nearly 0. If a desired performance is not obtained even at the end of learning because, for example, the first fuzzy rule was defined improperly, or the learning was trapped to a local optimum value, it was not possible to teach what a cause is and how to act to it. The present invention can store the value of $\delta\alpha$ calculated by the above mentioned means, and adequately process it to indicate. The following describes the learning status display step 704 in Fig. 7.

Fig. 8(a) is a resulted indication of learning status with respect of the node (for example, 503 in Fig. 5) for calculation a membership function corresponding to an input variable. An x-axis 801 of the figure assumes value of input variable $X_i$, and an y-axis is output value of the node.

A graph 803 shows a shape of the membership function representing the input-output relationship of the node concerned. A point 804 corresponds to the set of input and output at coordinates $X_i$ and $f(X_i) + \delta$ where $X_i$ is the input value to the node, $f(X_i)$ is the value of the membership function of the input, and $\delta$ is a value $\partial E/\partial z$ which is a result of differentiation of an error E by the output value $z = f(X_i)$ of the node as calculated by the learning algorithm. The graph can visually make clear representation what kinds of error signal the membership function undergoes when the learning ends.

Fig. 8(b) shows a status that learning is made bad for the node concerned, while Fig. 8(a) is the status that it is rather well. In the example, the membership function undergoes far different error signals for similar input values. That is, the value of averaged for the sets of input and output is 0, but they are dispersed to a great extent. This means that the fuzzy rule does not represent the input-output relationship properly. In the process flow in Fig. 7, are made turning processes for the fuzzy rules and membership functions on the basis of the data indicated in Fig. 8.

Although Fig. 8 has $f(X_i) + \delta$ indicated as the ordinate, it need hardly be said that similar effect can be obtained only by $f(X_i)$.

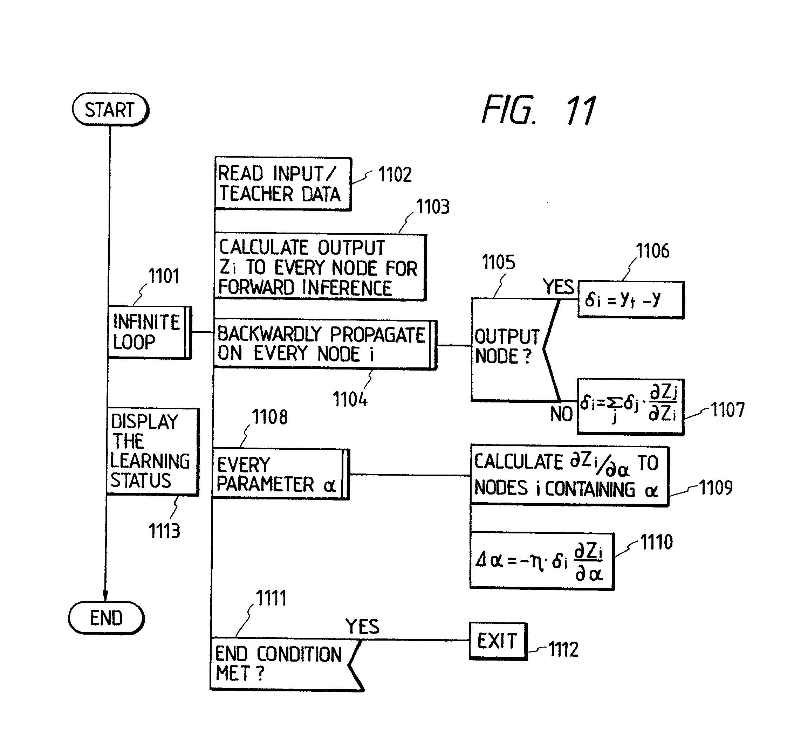

Fig. 11 is a flow chart for carrying out the third embodiment described above. In the following description, let $z_i$ be the output of each calculation node in Fig. 5, and $\delta_i$ be a differential coefficient of the output Y by $z_i$.

First, step 1101 repeats steps 1102 through 1112 unconditionally.

Step 1102 reads data used for learning, i.e., values of the input variables and output value $y_t$ desired for them.

Step 1103 makes fuzzy inference on the basis of the values of the input variables read in step 1102. In this process, we can obtain the output values $z_i$ of all the nodes of the calculation network in Fig. 5.

Step 1104 retraces back all the nodes of the calculation network from the output to input. It should be noticed that as the calculation network contains no closed loops, the retrace is determined certainly. Let i denote the number of the node selected in step 1104.

Step 1105 judges whether the node selected in step 1104 is the last one of the calculation network. If it is output node, step 1106 is executed, if not, step 1107 is executed.

Step 1106 obtains $\delta_i = Y_t - Y$ where $\delta_i$ is for the output node.

Step 1107 obtains $\delta_i$ for the nodes other than the output node using

$$\delta_i = \Sigma_j \, \delta_j \cdot \partial z_i/\partial z_j$$

where the summation is made for all the nodes j which have the outputs $z_i$ of the selected nodes input thereto.

This allows obtaining differential coefficients for the inference result Y by the outputs of all the nodes in the calculation network. These value should be stored in an adequate area for used in the learning status display step 704 shown in Fig. 7.

Step 1108 executes steps 1109 and 1110 for all the parameters $\alpha$ to be adjusted.

Step 1109 calculates $\delta z_i/\delta\alpha$ for the node i contained in the parameter $\alpha$. Since $\alpha$ is a parameter for determining the input-output relationship in the node i, the differential value can be easily obtained.

Step 1110 obtains a change $\Delta\alpha$ of the parameter $\alpha$ on the basis of the differential coefficient obtained in step 1109 by

$$\Delta\alpha = -\eta \cdot \delta_i \, \partial z_i/\partial\alpha$$

to change the value of the parameter $\alpha$ to $\alpha \leftarrow \alpha + \Delta\alpha$.

Step 1111 judges whether predetermined end conditions are met. As an example, it judges whether the above mentioned steps have been executed by a predetermined number of times, or judges whether a difference of the actual output and teacher date is smaller than a predetermined value as a result of the parameter adjustment. Step 1112 can be executed only when the end conditions are met.

Step 1112 regards that the parameter adjustment ends, comes out of the infinite loop in step 1101.

Step 1113 processes the value of $\delta_i$ calculated in step 1107 to the shape shown in Fig. 8 to indicate the learning status after the learning.

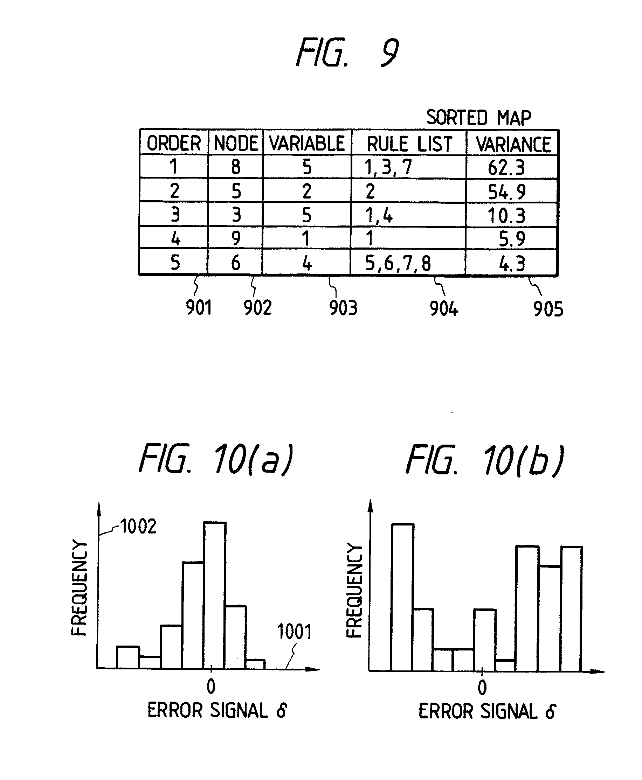

Fig. 9 shows results indicated as the learning statuses in a fourth embodiment of the present invention. The results are dispersions of $\delta$ calculated in step 1107 in Fig. 11 in connection with sets of input and output, and arranged in descending order of dispersion, including the node numbers, variable numbers, corresponding rule numbers, and variances.

In the figure, 901 is a column for the order numbers sorted in descending order of dispersion, 902 is for the node numbers, 903 is for the numbers for the variables input to the node, 904 is for the lists of the rule numbers containing the node, and 905 is for the variances.

With this, we can know membership functions for which the error signals $\delta$ disperse largely, or learning is not made properly, rules contains them. We therefore can give a reference for selecting membership functions or fuzzy rules to be redefined.

Fig. 9 has the nodes, variable, and rules denoted by numbers. It is, of course, possible to indicate all or parts of them by other symbols. The variable number 5, as an example, can be replaced by a variable name represented by it, for example, "temperature".

Fig. 10 shows results indicated as the learning status in a fifth embodiment of the present invention. The figure is a histogram which shows distribution of the values of $\delta$ calculated in step 1107 in Fig. 11. An x-axis 1001 takes value of the error signal $\delta$, and an y-axis 1002 is number of learning samples contained in a range in which the value of $\delta$ is specified. With indication of the histogram, we can easily judge whether the learning in connection with the node concerned is made. If the histogram is centered around 0 as shown in Fig. 10(a), the learning is made well. Conversely, if it is dispersed widely in Fig. 10(b), the learning is bad.

The third through fifth embodiments of the present invention described above are examples of the fuzzy inference. It can be seen in the calculation network in Fig. 5 that they are quite similar to the neural network. It is very easy to apply the indication way of learning status of the embodiments to the neural network. Thus, similar effects are accomplished.

It has been described both for the fuzzy inference and neural network that as the learning algorithm, the error signal $\delta$ was calculated by means of the error backpropagation method in which the errors of the output was propagated back in the calculation network. The present invention, however, is not inherent in the backpropagation, but can provide similar effect by way of, for example, a finite difference calculus which makes clear how the parameter to be adjusted relates to the output in a way that change of the output value is measured when the parameter is varied little. That is, the error backpropagation method has amount proportional to $\partial E/\partial z$ as the error signal $\delta$, while the finite difference calculus has amount proportional to $\Delta E/\Delta z$ as $\delta$. Even in the latter method, if $\Delta z$ is sufficiently small , the finite difference value approximates the differentiated value, ignoring the computational quantity and time needed for calculation.

Also, it was described that the above mentioned embodiments had the indications on the basis of the error signal of node output. In another way, however, they can indicate dispersion and distribution of the error signal in connection with any of the parameters to be adjusted, for example, the parameters for specifying the shapes of the membership functions in the fuzzy inference, such as $a_1$, $a_2$, $a_3$, and $a_4$ in Fig. 4. This also can be expected to provide similar effect.

Further, it was described that the above mentioned embodiments had the indication of the learning status after completion of the learning. Of course, the indication can also be made before the learning. This allows knowing of the entire characteristic aspect of the set of input and output given. Learning therefore can be started by computer before roughly adjusting the parameters. This is advantageous to reduce the calculation time for learning and the time needed for building the entire fuzzy inference or neural network system.

The fuzzy inference system according to the present invention can calculate the sensitivity of any of the parameters contained in the inference affecting the output, or the partial differential coefficient, in the way that the fuzzy inference process is represented in the calculation network, the difference of the actual output from the teacher date is made the error signal, and the error signal is made to flow in the calculation network in a reverse direction of the inference. Thus, it provides the following advantage.

(1) In the general fuzzy inference method containing a plurality of fuzzy inferences, it is possible to adjust all the parameters containing the membership functions of the input and output variables. This allows more precise adjustment of the parameters to increase the performance of the fuzzy inference.

(2) Fewer amount of computation is needed for adjusting the parameter. This can lower the calculation cost required for the parameter adjustment.

Also, the fuzzy inference system of the present invention can effectively indicate the calculation status during and after learning of the fuzzy inference or neural network. Thus, it provides the following further advantages.

(3) The internal calculation status can be recognized easily. It therefore is possible to give proper directions for correcting the fuzzy rules, membership functions, and neural network structure.

(4) It is possible to build up the fuzzy inference system or neural network having higher performance in a short time.

## Claims

1. A method for fuzzy inference parameter adjustment in a fuzzy inference system, comprising:
   a step for obtaining an output value by a node from at least one input value in a calculation network having a plurality of nodes for calculating the output value from at least one input value in predetermined procedures and at least link for connection between the nodes;
   a step for obtaining a fuzzy inference output value with use of the calculation network by inputting an output value of a node to another node through the link for the node;
   a step for obtaining an error of the fuzzy inference output value from a predetermined expected output value, and
   a step for adjusting the fuzzy inference parameter on the basis of the error.

2. A method according to claim 1, wherein the expected output value is a teacher data value given in advance.

3. A method according to claim 1, wherein the step for adjusting the parameter is executed on the basis of a change of the error for small variation of the parameter.

4. A method according to claim 3, wherein the change of the error is obtained in a reverse procedure to the fuzzy inference with use of the calculation network.

5. A method according to claim 1, wherein the fuzzy inference is made by representing the membership function in the fuzzy inference in terms of input-output relationship of the node in the calculation network.

6. A method according to claim 5, wherein a shape of the membership function is specified by one or a plurality of parameters.

7. A method for learning in a system for calculating an output from an input in a way predetermined by one or a plurality of parameters, comprising:
   a step for learning input-output relationships between pluralities of sets of inputs and outputs expected in advance;
   a step for obtaining a value by differentiating or finite differencing a difference of an output value to an input from an expected output value with respect to the parameter for each of the sets of the inputs and the outputs; and

a step for processing the obtained value through predetermined means to output.

8. A method according to claim 7, wherein the expected output value is a teacher date value given in advance for the input.

9. A method according to claim 7, wherein the parameter related to the value obtained by the differentiation or finite difference calculus is an intermediate output in the calculation system.

10. A method according to claim 7, wherein the processing and output step is a processing and indicating step for display.

11. A method according to claim 7, wherein calculation by the calculation system is fuzzy inference.

12. A method according to claim 7, wherein calculation by the calculation system is the one by a neural network.

13. A method according to claim 7, wherein calculation by the calculation system is made a calculation network having a plurality of nodes.

14. A method according to claim 10, wherein the indication includes a process for indicating in a two-dimensional graph an input value of a node forming a calculation network and a value obtained by differentiation or finite difference calculus with respect to the input value.

15. A method according to claim 14, wherein the indication is made to overlap a graph showing an input-output relationship of the node.

16. A method according to claim 10, wherein the indication includes a process for indicating in a histograph distribution of the differentiated or difference-calculated value.

17. A method according to claim 10, wherein data shown by the indication include a second order statistical value of the differentiated or finite difference calculated value.

18. A method according to claim 17, wherein the data shown by the indication include distribution of the differentiated or finite difference calculated values in connection with an output of a node forming a calculation network.

19. A method according to claim 18, wherein the data shown by the indication include data one or a plurality of nodes corresponding to the distribution in order of wideness.

20. A system for adjusting fuzzy inference parameter in a fuzzy inference system, comprising:

a calculation network having a plurality of nodes for calculating the output value from at least one input value in predetermined procedures and at least link for connection between the nodes;

means for obtaining an output value by a node from at least one input value in the calculation network;

means for obtaining a fuzzy inference output value with use of the calculation network by inputting an output value of a node to another node through the link for the node;

means for obtaining an error of the fuzzy inference output value from a predetermined expected output value, and

means for adjusting the fuzzy inference parameter on the basis of the error.

21. A system for calculating and learning an output from an input in a way predetermined by one or a plurality of parameters, comprising:

means for learning input-output relationships between pluralities of sets of inputs and outputs expected in advance;

means for obtaining a value by differentiating or finite differencing a difference of an output value to an input from an expected output value with respect to the parameter for each of the sets of the inputs and the outputs; and

13

means for processing the obtained value through predetermined means to output.

# FIG. 1

# FIG. 2

# FIG. 3

# FIG. 4

# FIG. 5

FIG. 6

EP 0 460 642 A2

START

READ INPUT/
TEACHER DATA — 602

CALCULATE OUTPUT
$Z_i$ TO EVERY NODE FOR
FORWARD INFERENCE — 603

601 — INFINITE
LOOP

BACKWARDLY PROPAGATE
ON EVERY NODE i — 604

605 — OUTPUT
NODE ?

YES — 606 — $\delta_i = y_t - y$

NO — 607 — $\delta_i = \sum_j \delta_j \cdot \dfrac{\partial Z_j}{\partial Z_i}$

608 — EVERY
PARAMETER $\alpha$

CALCULATE $\partial Z_i / \partial\alpha$ TO
NODES i CONTAINING $\alpha$ — 609

$\Delta\alpha = -\eta \cdot \delta_i \dfrac{\partial Z_i}{\partial\alpha}$ — 610

END

611 — END CONDITION
MET ?

YES — EXIT — 612

# FIG. 7

```
                    START

        ┌──────────────────────────┐
        │   DEFINE THE FUZZY RULE  │────701
        └──────────────────────────┘
                      │
        ┌──────────────────────────┐
        │   DEFINE THE MEMBERSHIP  │────702
        │   FUNCTION               │
        └──────────────────────────┘
                      │
        ┌──────────────────────────┐
        │         LEARN            │────703
        └──────────────────────────┘
                      │
        ┌──────────────────────────┐
        │   DISPLAY THE LEARNING   │────704
        │   STATUS                 │
        └──────────────────────────┘
                      │                    705
                  ╱────────────╲
                 ╱  EVALUATE    ╲
                 ╲ AND ANALYZE  ╱
                  ╲  RESULT    ╱
                   ╲──────────╱
                      │
                    END
```

## FIG. 8(a)

OUTPUT

f(xi)+δ

f(xi)

802   804   803

801

Xi     INPUT Xi

## FIG. 8(b)

OUTPUT

INPUT Xi

## FIG. 9

SORTED MAP

| ORDER | NODE | VARIABLE | RULE LIST | VARIANCE |
|-------|------|----------|-----------|----------|
| 1 | 8 | 5 | 1,3,7 | 62.3 |
| 2 | 5 | 2 | 2 | 54.9 |
| 3 | 3 | 5 | 1,4 | 10.3 |
| 4 | 9 | 1 | 1 | 5.9 |
| 5 | 6 | 4 | 5,6,7,8 | 4.3 |

901   902   903   904   905

## FIG. 10(a)

FREQUENCY

1002

1001

0

ERROR SIGNAL $\delta$

## FIG. 10(b)

FREQUENCY

0

ERROR SIGNAL $\delta$

## FIG. 11

START

READ INPUT/ TEACHER DATA — 1102

CALCULATE OUTPUT $Z_i$ TO EVERY NODE FOR FORWARD INFERENCE — 1103

1101 — INFINITE LOOP

BACKWARDLY PROPAGATE ON EVERY NODE i — 1104

1105 — OUTPUT NODE?

YES → 1106 — $\delta_i = y_t - y$

NO → $\delta_i = \sum_j \delta_j \cdot \dfrac{\partial Z_j}{\partial Z_i}$ — 1107

1108 — EVERY PARAMETER $\alpha$

CALCULATE $\partial Z_i / \partial \alpha$ TO NODES i CONTAINING $\alpha$ — 1109

$\Delta \alpha = -\eta \cdot \delta_i \dfrac{\partial Z_i}{\partial \alpha}$ — 1110

1111 — END CONDITION MET?

YES → EXIT — 1112

DISPLAY THE LEARNING STATUS — 1113

END